# EUROPEAN PATENT SPECIFICATION

(11) **EP 0 407 071 B1**
(45) Date of publication and mention of the grant of the patent: **28.09.1994**
(21) Application number: 90306855.9
(22) Date of filing: 22.06.1990
(51) Int. Cl.: B60C 9/20

(54) **Heavy duty high speed radial tyre**
Radialer Reifen für hohe Geschwindigkeiten und hohe Belastungen
Pneumatique radial, haute vitesse, grande charge

(30) Priority: 30.06.1989 JP 170689/89
(43) Date of publication of application: 09.01.1991
(73) Proprietor: SUMITOMO RUBBER INDUSTRIES LIMITED, Kobe-shi Hyogo-ken (JP)
(72) Inventor: Ueyoko, Kiyoshi, Osaka-shi, Osaka-fu (JP); Miyazaki, Shinichi, Kobe-shi, Hyogo-ken (JP); Takatsu, Mikio, Takarazuka-shi, Hyogo-ken (JP); Nishitani, Masayoshi, Kobe-shi, Hyogo-ken (JP)
(74) Representative: Stewart, Charles Geoffrey

(56) References cited:
- EP-A- 0 296 093
- FR-A- 2 587 277
- GB-A- 855 662
- GB-A- 2 042 429

## Description

The present invention relates to a heavy duty high speed radial tyre, in which various tyre performance characteristics such as structural durability and resistance to high internal pressure are improved.

Heavy duty high-speed radial tyres such as for example aircraft tyres for jumbo jets are required to have high durability against repeated large deformations since tyre deformation when landing is very large, to have high resistance to high-speed running under severe load conditions, to withstand a very high internal pressure, for example 10 to 16 kgf/cm² as is typical for the design pressure for such a tyre, to withstand taxi conditions in which the ground speed is relatively low but the tyre is subjected to a heavy load for a long time, and to provide a high degree of cornering force to give the necessary vehicle stability when the aircraft turns on the ground.

Recently, belted radial structures have become to be widely used for such aircraft tyres, utilising for the belt nylon cords rather than the heavier steel cords to reduce tyre weight.

However, nylon cords are inferior in tensile strength, which results in insufficient resistance to high internal pressure, and sometimes results in a poor resistance to wear under the very recent severe service conditions.

Therefore, in the present invention, an aromatic polyamide fibre cord is used for the belt cord because aromatic polyamide fibre cords have a very large tensile strength and a very high modulus like steel cord, but the specific gravity is similar to nylon.

A radial tyre for aircraft corresponding to the preamble of claim 1 and having a crown belt comprising cords of an aromatic polyamide material is known from GB-A-2 042 429. In this prior art tyre the crown belt comprises two or more superimposed layers or pairs of layers of twisted cords wherein the extension rate of the cord under load increases from the inner layers towards the outer layers.

However, the results with the known aromatic polyamide fibre cords are not so good as expected since the cords are broken relatively easily when folded (such as occurs when the tyre is largely deformed), and the adhesion to rubber is inferior owing to its high degree of crystallisation.

It is therefore the object of the present invention to provide a heavy duty high speed belted radial tyre, in which the various tyre performance characteristics such as structural durability, resistance to high internal pressure, cornering performance and the like are improved using aromatic polyamide fibre cords for the belt structure.

According to the present invention, a heavy duty high speed radial tyre comprises a carcass, turned up around bead cores disposed one in each bead portion of the tyre, and composed of at least one ply of cords laid at angles of no less than 75 degrees and no more than 90 degrees with respect to the tyre equator, and a belt disposed radially outside the carcass and inside a rubber tread, said belt comprising a band belt and a breaker belt disposed radially inside the band belt, whereby said breaker belt is composed of a plurality of plies of breaker belt cords laid at angles of from 10 to 30 degrees to the tyre equator so that the breaker belt cords in each ply cross the breaker belt cords in the adjacent ply, said band belt is composed of a plurality of band plies, each said band ply made of at least one band belt cord wound spirally and continuously from one edge to the other edge of the ply so that the cord angle is in the range of from 0 to 5 degrees to the tyre equator, said breaker belt cords and said at least one band belt cord being aromatic polyamide fibre cords each satisfying the following conditions: the twist coefficient TN of each said belt cord being not less than 2.466 x 10³ and not more than 3.036 x 10³, and the elongation E (%) at breakage of each said belt cord divided by the total denier number D of the cord, being not less than 7.78 x 10⁻⁴ and not more than 12.22 x 10⁻⁴, wherein the said twist coefficient TN is the product Tx√D of the cable twist number T (turns/10cm) of the cord and the square root of the total denier number D (deniers) of the cord.

Further, the adhesion of the belt cord to its topping rubber may be 21.0 kgf/cm or more.

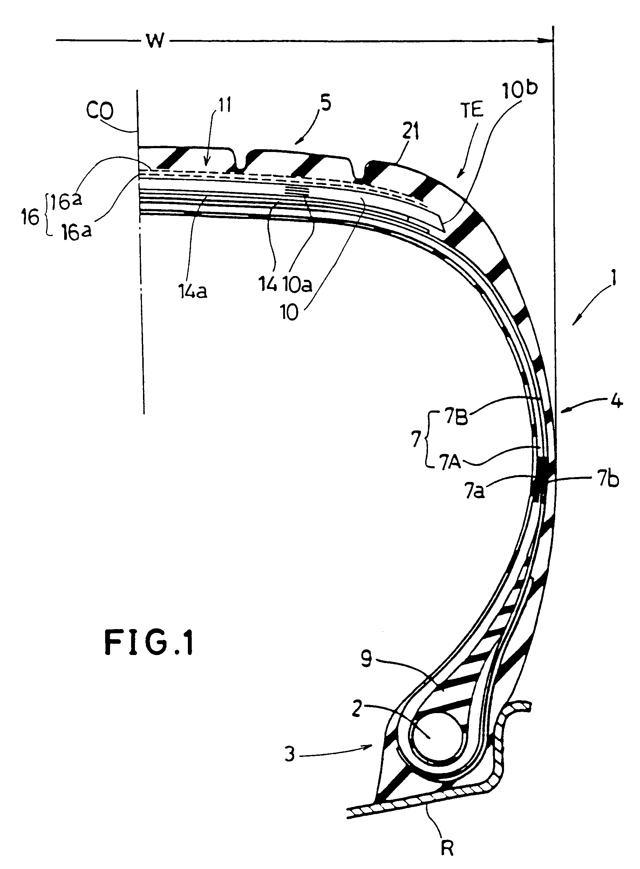

An embodiment of the present invention will now be described in details with reference to Figure 1 which is a sectional view showing the right half of a tyre cross section.

In the drawing, the radial tyre 1 is an aircraft tyre of size 46 x 17R20, and the tyre is mounted on its regular rim R and inflated to its normal pressure.

The tyre 1 has a pair of bead portions 3, a tread 5 and a pair of sidewalls 4. A bead core 2 is disposed in each bead portion 3 and a carcass 7 extends between the bead portions 3 through the sidewalls 4 and under the tread 5.

The carcass 7 in this embodiment comprises an inner layer 7A and an outer layer 7B.

The inner layer 7A is composed of plural plies 7a, in this example four plies, each turned up around each bead core 2 from the inside to the outside of the tyre.

The outer layer 7B is composed of plural plies 7b, in this example two plies, each turned up around each bead core 2 from the outside to the inside of the tyre so as to overlap the turned up portions of the inner layer 7A.

Each of the carcass plies 7a and 7b is composed of cords arranged radially of the tyre at angles of 75 to 90 degrees to the tyre equator, and in this embodiment the cords are inclined with respect to the tyre equator at 85 degrees so that the cords of each of the carcass plies 7a and 7b cross the cords of the adjacent carcass ply, whereby the lateral rigidity of the tyre is increased.

The bead portions 3 are each provided radially outside the bead core 2 with a rubber bead apex 9, which extends radially outwardly and taperingly from the bead core to increase the bead rigidity.

The tread 5 is provided with a belt structure 11 between the carcass 7 and a rubber ground engaging tread disposed on the carcass.

The belt structure 11 in this embodiment is composed of three layers a band 10, a breaker 14 and a protector 16. The band 10 is located in the centre of the belt structure 11, the breaker 14 is disposed between the band 10 and the carcass 7, and the protector 16 is disposed between the band 10 and the tread.

The band 10 comprises plural plies 10a of cords arranged at no more than 5 degrees to the tyre equator CO since the main part thereof is a hoop for the tread portion.

The widths of the band plies 10a are decreased gradually in the radially outward direction as shown in Figure 1, and thereby the side profile 10b of the band 10 as a whole is inclined to be almost parallel with the outer surface of the tyre buttress part, namely, the upper part of the sidewall portion.

The maximum width of the band 10, that is the width of the radially innermost widest ply 10a in this example, is 65 to 85% of the section width W of the tyre.

In connection with the cord angles, successive band plies 10a have their cords inclined in opposite directions with respect to the tyre equator.

The above-mentioned breaker 14 acts to increase the rigidity of the tread portion in the widthwise direction of the tread to provide cornering force.

The breaker cords are preferably arranged so as to form also a triangular structure with the carcass cords and the above-mentioned band cords which are respectively inclined at 75 to 90 degrees and 5 degrees or less as explained above.

Therefore, the breaker 14 is composed of at least one ply 14a of cords arranged at 0 to 70 degrees with respect to the tyre equator, more preferably 10 to 30 degrees. In this example the breaker is composed of two plies of cords laid at 19 degrees and successive plies are inclined in reverse directions with respect to the tyre equator.

However, when the inclination of the carcass plies is relatively great, for example if the carcass angle to the tyre equator is 75 to 80 degrees, the inclination of the breaker cords may be set at almost 0 degrees to the tyre equator.

Preferably, the breaker is formed at a narrower width than the band 10, and the edges of the breaker ply 14a are respectively terminated beneath the edge portions of the band and axially inside the edges of the band.

However, it is also possible to terminate the breaker ply edges so as to align with the band edges or so as to project slightly therefrom.

Thus, by the breaker 14 itself and moreover by the resultant triangular cord structure, the tread rigidity in the widthwise direction of the tread is increased to improve cornering force, and further the structural durability is improved.

The protector 16 is to provide resistance to cutting from the outside of the tyre, and at the same time bridges the difference in rigidity between the rubber tread and the band 10 to mitigate shearing stress therebetween.

The protector 16 is composed of at least one ply of cords laid at larger angles than the band cord angle. In this embodiment two plies 16a of cords are arranged at 27 degrees to the tyre equator.

The belt cords of the belt structure, in this embodiment the cords of the band 10 and breaker plies, are the same cords composed of twisted strands of twisted filaments of aromatic polyamide fibres, wherein the twist coefficient TN of the cord is not less than 2.466 x 10³ and not more than 3.036 x 10³. Here, the twist coefficient TN is defined as the product Tx√D of the cable twist number T (turns/10cm) multiplied by the square root of the total denier number D (deniers) of the cord.

If the twist coefficient is less than 2.466 x 10³, the elongation of the cord is too small, and the cornering performance of the tyre is very poor.

If the coefficient is more than 3.036 x 10³, the elongation of the belt cord becomes too large and lowers the hoop effect of the belt structure, which results in a loss of resistance to ply separation and thereby the necessary structural durability is not obtained.

Further, in this embodiment, the elongation E (%) of the belt cord at break measured by increasing the cord load divided by the above-mentioned total denier number D, is preferably not less than 7.78 x 10⁻⁴ and not more than 12.22 x 10⁻⁴.

If the quotient E/D is less than 7.78 x 10⁻⁴, the stretch of the belt when the tyre is inflated is too small, which results in decrease in the ability to mitigate compressive stress which acts in the tread portion and the bead portions when the tyre is deformed.

On the other hand if E/D is more than 12.22 x 10⁻⁴, the stretch of the belt becomes so large that the problem of belt edge separation occurs.

The belt cords are topped by a rubber to form the band ply 10a and the breaker ply 14a, and the protector plies 16a are formed similarly.

The topping rubber has to possess not only a low heat-generating characteristic but also an appropriate stiffness so as not to disturb the above-mentioned characteristics of the belt cord. For this purpose, a rubber composition having the elastic characteristics that the 100% modulus is 30 to 70 kgf/cm² and the elongation at rupture is not less than 200% and not more than 500% is preferably used.

Further the base material of the rubber composition is composed of one or more materials selected from natural rubber and synthetic isoprene rubber.

Furthermore, the content of carbon black in the rubber composition is 50 to 70 parts by weight.

When the carbon content is less than 50 parts by weight, the composition is not sufficiently reinforced. When the content exceeds 70 parts by weight, the heat generation is too great.

Further, when the 100% modulus is less than 30 kgf/cm², the heat generation has a strong tendency to increase. On the contrary, when it exceeds 70 kgf/cm², the strength has a tendency to be too low.

Furthermore, when the elongation at breakage is less than 200%, breakage of the rubber is apt to be caused when deformation of the tyre is very large. When it is more than 500%, the heat generation increases.

In general, aromatic polyamide fibre cords have a superior strength and a very low extensibility, but involve the problem that adhesion to the topping rubber is smaller when compared with nylon fibre cords and aliphatic polyamide fibre cords, which problem has obstructed their use.

In a heavy duty high speed radial tyre for aircraft or the like, if the adhesion is less than about 21.0 kgf/cm, rubber separation might occur in conditions of high-speed rotation under a heavy load and large deformation, and thus, it can not be adopted for such a use.

Table 1 shows a treating method (so called double dipping) for a nylon or aliphatic polyamide fibre cord, by which the adhesion of the nylon or aliphatic polyamide fibre cord to the topping rubber is effectively improved, but in the aromatic polyamide fibre cord, this method is ineffective, and adhesion more than 21.0 kgf/cm can not be obtained.

However, we have found an effective method of treating the aromatic polyamide fibre cord, through which the adhesion to the topping rubber has the same or greater level than nylon or aliphatic polyamide fibre cords and thereby it becomes possible to use aromatic polyamide fibre cords for the belt cord.

Table 2 shows this improved treating method, in which the aromatic polyamide fibre cord is treated by a 1st dipping process twice continuously and than a 2nd dipping process twice continuously.

Further, in this embodiment, for the carcass cords, the same aromatic polyamide fibre cord is used as the above-mentioned belt cord. However, a single material cord or a hybrid cord composed of plural material which material or materials is/are selected from extensible organic fibre such as aromatic polyamide, nylon, polyester and the like; carbon fibres; and metallic wires such as steel, may be used.

In each of the carcass plies 7a and 7b, the carcass cords are embedded in the topping rubber.

Furthermore, the above-mentioned band plies 10a in this embodiment are formed by a cord winding method. That is, one or more cords are wound spirally and continuously from one tread edge TE to the other tread edge TE. By employing such a cord winding method, the hoop effect of the band is remarkably improved to increase the rigidity of the tread portion. Preferably, the cord thickness in each ply is varied so that the thickness is larger in the central part than the edge parts. Therefore, the central part of the tread portion in, which the largest expansive force acts is strengthened more than than the edge parts, and as a result the strength of the tread portion is evened, and the tyre weight can be reduced.

According to the specifications shown in Table 3, belt cords for a 46 x 17R20 aircraft tyre shown in Figure 1 were made to compare their adhesions. The test results are shown in the same Table 3, wherein the adhesion of aromatic polyamide fibre cord A was increased by 14% in comparison with aromatic polyamide fibre cord B, and demonstrated approximately equal adhesion to the nylon fibre cord B.

Test aircraft tyres of 46 x 17R20 size having the structure shown in Figure 1 were made in order to test their durability, heat generation and resistance to high internal pressure. The specifications of the test tyres are given in Table 4.

A durability test according to TSO-C62c, Technical Standard Order of the U S Federal Aviation Administration, and high-speed take-off cycle and a taxi cycle test were carried out to evaluate the durability of each test tyre. The total running distance of the tyre until any tyre failure occurred was measured as a measure of durability. The results are indicated by index in Table 4.

A heat generation test in which a speed and a load corresponding to the normal service condition were applied and a test was carried out and the temperature was measured at the tread portion, sidewall and bead of each test tyre.

Over pressure test in which the tyre was filled with water, and the water pressure was increased to cause any tyre failure was also done and the results are shown in Table 4.

As described above, the belt cords are made of aromatic polyamide fibres and characterised in that the twist coefficient TN is set to be in the range of 2.466 x 10³ to 3.036 x 10³, the elongation E (%) at breakage divided by the total denier number D is in the range of 7.78 x 10⁴ to 12.22 x 10⁴, and the adhesion of the belt cord to the topping rubber is not less than 21.0 kgf/cm.

As a result the hoop effect of the belt structure is effectively improved, and the tyre can withstand high internal pressure. Further, as the belt structure is provided with a proper high extensibility, separation failure such as belt edge looseness can be prevented even under severe service conditions such as high-speed and heavy load and high internal pressure. Accordingly, the tyre is improved in structural durability, together with various performance characteristics such as cornering performance.

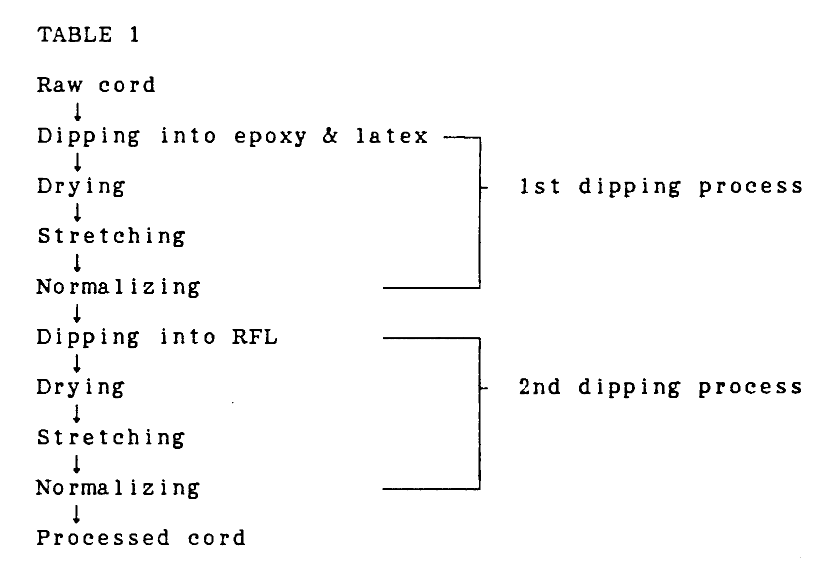

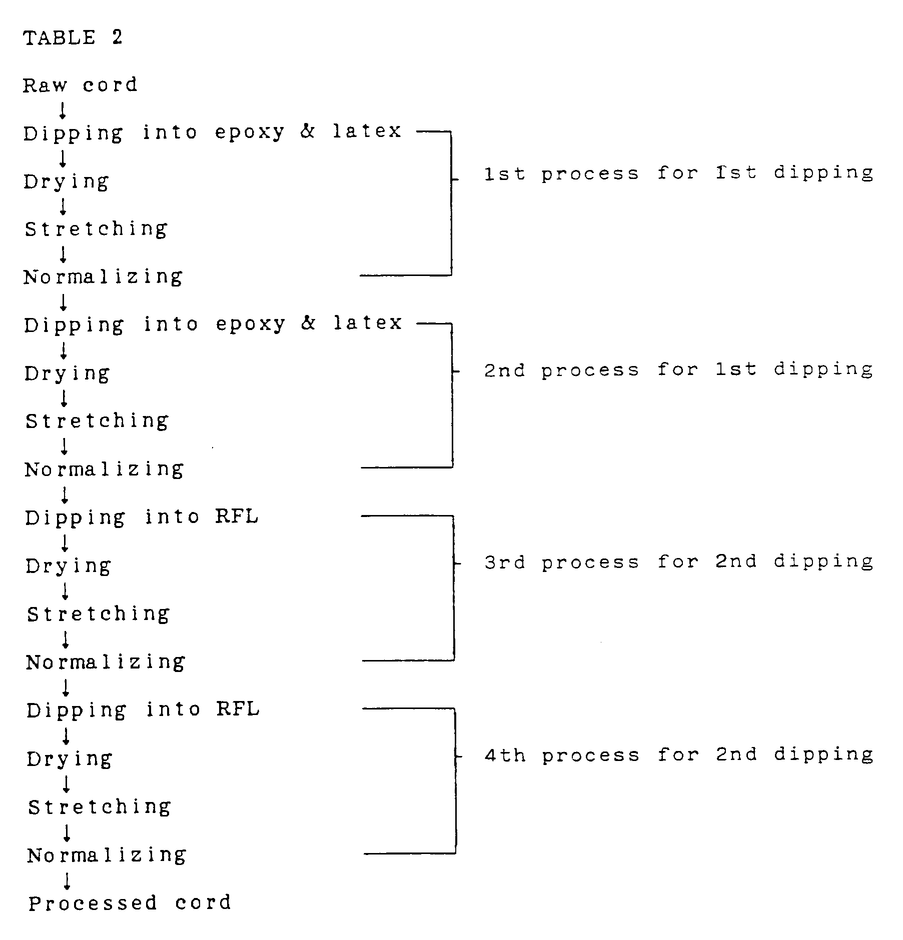

**TABLE 3**

| Cord | A | B | C |
|---|---|---|---|
| Material | aromatic polyamide fibers (3000d/3) | nylon fibers (1890d/3) | aromatic polyamide fibers (3000d/3) |
| Total denier D | 9000 | 5670 | 9000 |
| Cable twist T (turns/10cm) | 30 | 34 | 22 |
| Twist coefficient TN=Tx√D | 2.846x10⁴ | 2.56x10⁴ | 2.087x10⁴ |
| Strength (kgf) | 129.0 | 48.0 | 150.0 |
| Elongation at breakage E (%) | 9.0 | 28.0 | 60 |
| E/D | 10x10⁻⁴ | 49.38x10⁻⁴ | 6.67x10⁻⁴ |
| Thickness d (mm) | 1.29 | 1.05 | 1.25 |
| Ends per 50 mm | 33 | 42 | 33 |
| Treating method | Table 2 | Table 1 | Table 1 |
| Adhesion (kgf/cm) | 23.8 | 24.5 | 20.9 |

**TABLE 4**

| TIRE | Ex.1 | Ref.1 | Ref.2 | Ref.3 | Ref.4 | Ref.5 |
|---|---|---|---|---|---|---|
| CARCASS | | | | | | |
| Inner layer | 2 plies | 4 plies | 2 plies | 2 plies | 2 plies | 2 plies |
| Outer layer | 1 ply | 2 ply | 1 ply | 1 ply | 1 ply | 1 ply |
| Cord material | aromatic polyamide fibers | nylon fibers | aromatic polyamide fibers | aromatic polyamide fibers | aromatic polyamide fibers | aromatic polyamide fibers |
| BAND | 4 plies | 9 plies | 3 plies | 3 plies | 8 plies | 3 plies |
| Cord material | aromatic polyamide fibers | nylon fibers | aromatic polyamide fibers | aromatic polyamide fibers | nylon fibers | aromatic polyamide fibers |
| BREAKER | 2 plies | Absent | 2 plies | 2 plies | 2 plies | 2 plies |
| Cord material | aromatic polyamide fibers | | aromatic polyamide fibers | aromatic polyamide fibers | nylon fibers | aromatic polyamide fibers |
| PROTECTOR | Present | Present | Absent | Absent | Absent | Absent |
| Durability | 200 | 200 | 10 | 70 | 20 | 20 |

| Temperature (degs.) | | | | | | |
|---|---|---|---|---|---|---|
| Tread part | 89 | 80 | 96 | 91 | 85 | 67 |
| Shoulder part | 81 | 72 | 86 | 66 | 105 | 109 |
| Bead part | 65 | 70 | 111 | 100 | 104 | 94 |
| Over-pressure Resistance (Kgf/sq.cm) | 81.0 (Belt ply broken) | 67.5 (Side-wall broken | | 40-60 (Belt ply broken) | | |
| Tire weight (kg) | 71.7 | 77.0 | 73.8 | 74.6 | 74.5 | 73.4 |

## Claims

1. A heavy duty high speed radial tyre comprising a carcass (7), turned up around bead cores (2) disposed one in each bead portion (3) of the tyre, and composed of at least one ply of cords laid at angles of no less than 75 degrees and no more than 90 degrees with respect to the tyre equator, and a belt (11) disposed radially outside the carcass (7) and inside a rubber tread (5), said belt (11) comprising a band belt (10) and a breaker belt (14) disposed radially inside the band belt (10), said breaker belt (14) being composed of a plurality of plies (14a) of breaker belt cords laid at angles of from 10 to 30 degrees to the tyre equator so that the breaker belt cords in each ply cross the breaker belt cords in the adjacent ply, said band belt (10) being composed of a plurality of band plies (10a), said breaker belt cords and said at least one band belt cord being aromatic polyamide fibre cords each satisfying the following conditions: the twist coefficient TN of each said belt cord being not less than 2.466 x 10³ and not more than 3.036 x 10³, and the elongation E (%) at breakage of each said belt cord divided by the total denier number D of the cord, being not less than 7.78 x 10⁻⁴ and not more than 12.22 x 10⁻⁴, wherein the said twist coefficient TN is the product Tx√D of the cable twist T (turns/10cm) of the cord and the square root of the total denier number D (deniers) of the cord, characterised in that each said band ply (10a) is made of at least one band belt cord wound spirally and continuously from one edge to the other edge of the ply so that the cord angle is in the range of from 0 to 5 degrees to the tyre equator.

2. A radial tyre according to claim 1, characterised in that the thickness of the wound belt cord in each said band belt ply is larger at the tyre equator than the edge parts of the ply.

3. A radial tyre according to claim 1, characterised in that said belt cords are rubberised with a rubber composition having a 100% modulus of 30 to 70 kgf/cm² and an elongation at rupture of not less than 200% and not more than 500%.

4. A radial tyre according to claim 3, characterised in that the adhesion of the belt cord to its topping rubber is not less than 21.0 kgf/cm.

5. A radial tyre according to claim 1, characterised in that said carcass (7) comprises an inner layer (7A) turned up around the bead cores from the inside to the outside of the tyre, and an outer layer (7b) turned up around the bead cores from the outside to the inside of the tyre so as to wrap the turned up portions of the inner layer (7a).

6. A radial tyre according to claim 5, characterised in that said inner layer (7A) is composed of a plurality of plies (7a), said outer layer (7B) is composed of a plurality of plies (7b).

## Patentansprüche

1. Ein Schwerlasthochgeschwindigkeitsradialreifen mit einer Karkasse (7), die um Wulstkerne (2) umgeschlagen ist, von denen einer in jedem Wulstteil (3) des Reifens angeordnet ist, und die aus zumindest einer Lage von Korden zusammengesetzt ist, die in Winkeln nicht kleiner als 75° und nicht größer als 90° mit Bezug auf den Reifenäquator gelegt sind, und einem Gürtel (11), der radial außerhalb der Karkasse (7) und innerhalb einer Gummilauffläche (5) angeordnet ist, wobei der Gürtel (11) einen Bandgürtel (10) und einen Breakergürtel (14) umfaßt, der radial innerhalb des Bandgürtels (10) angeordnet ist, der Breakergürtel (14) aus einer Vielzahl von Lagen (14a) von Breakergürtelkorden, die in Winkeln von 10 bis 30° zum Reifenäquator gelegt sind, zusammengesetzt ist, so daß die Breakergürtelkorde in jeder Lage die Breakergürtelkorde in der benachbarten Lage kreuzen, der Bandgürtel (10) aus einer Vielzahl von Bandlagen (10a) zusammengesetzt ist, die Breakergürtelkorde und der zumindest eine Bandgürtelkord aromatische Polyamidfaserkorde sind, die jeder den folgenden Bedingungen genügen: der Drehungkoeffizient TN von jedem des Gürtelkords ist nicht kleiner als 2,466 x 10³ und nicht größer als 3,036 x 10³, und die Dehnung E (%) beim Bruch von jedem Gürtelkord geteilt durch die Gesamtdenier-Zahl D des Kords ist nicht kleiner 7,78 x 10⁻⁴ und nicht größer 12,22 x 10⁻⁴, worin der Drehungskoeffizient TN das Produkt Tx√D der Kabeldrehung T (Windungen/10 cm) des Kords und der Quadratwurzel der Gesamtdenier-Zahl D (Denier) der Korde ist,
dadurch **gekennzeichnet,**
daß jede der Bandlagen (10a) aus zumindest einem Bandgürtelkord hergestellt ist, der spiralartig und kontinuierlich von einem Rand zum anderen Rand der Schicht gewickelt ist, so daß der Kordwinkel in dem Bereich von 0 bis 5° zum Reifenäquator liegt.

2. Ein Radialreifen nach Anspruch 1,
dadurch **gekennzeichnet,**
daß die Dicke des gewickelten Gürtelkordes in jeder Bandgürtellage größer beim Reifenäquator als an den Randteilen der Lage ist.

3. Ein Radialreifen nach Anspruch 1,
dadurch **gekennzeichnet,**
daß die Gürtelkorde mit einer Gummizusammensetzung mit einem 100 % Modul von 30 bis 70 kp/cm² und einer Dehnung bei Reißen von nicht weniger als 200 % und nicht mehr als 500 % gummiert sind.

4. Ein Radialreifen nach Anspruch 3,
dadurch **gekennzeichnet,**
daß die Adhäsion des Gürtelkords an sein Deckgummi nicht kleiner als 21 kp/cm ist.

5. Ein Radialreifen nach Anspruch 1,
dadurch **gekennzeichnet,**
daß die Karkasse (7) eine innere Schicht (7A) umfaßt, die um die Wulstkerne von der Innenseite zur Außenseite des Reifens umgeschlagen ist, und eine äußere Schicht (7b) um die Wulstkerne von der Außenseite zur Innenseite des Reifens umgeschlagen ist, Om so die umgeschlagenen Teile der inneren Schicht (7a) einzuwickeln.

6. Ein Radialreifen nach Anspruch 5,
dadurch **gekennzeichnet,**
daß die innere Schicht (7A) aus einer Vielzahl von Lagen (7a) zusammengesetzt ist, die äußere Schicht (7B) aus einer Vielzahl von Lagen (7b) zusammengesetzt ist.

## Revendications

1. Pneumatique à carcasse radiale pour lourdes charges et vitesses élevées comprenant une carcasse (7) repliée autour de tringles (2) disposées chacune dans une partie de talon (3) du pneumatique et composée d'au moins une nappe de câblés faisant des angles qui ne sont pas inférieurs à 75° ni supérieurs à 90° avec l'équateur du pneumatique, et une ceinture (11) disposée radialement à l'extérieur de la carcasse (7) et à l'intérieur d'une bande de roulement (5) de caoutchouc, la ceinture (11) comprenant une ceinture (10) de bandage et une ceinture (14) de nappe sommet disposée radialement à l'intérieur de la ceinture (10) de bandage, la ceinture (14) de nappe sommet étant composée de plusieurs nappes (14a) de câblés de ceinture de nappe sommet faisant des angles compris entre 10 et 30° avec l'équateur du pneumatique afin que les câblés de ceinture de nappe sommet de chaque nappe recoupent les câblés de ceinture de nappe sommet de la nappe adjacente, la ceinture (10) de bandage étant composée de plusieurs nappes (10a) de bandage, les câblés de ceinture de nappe sommet et les câblés d'au moins une ceinture de bandage étant formés de câblés de fibres de polyamide aromatique remplissant chacun les conditions suivantes : le coefficient de torsion TN de chaque câblé de ceinture n'est pas inférieur à 2,466.10³ ni supérieur à 3,036.10³, et l'allongement E (%) à la rupture de chaque câblé de ceinture divisé par le denier total D du câblé n'est pas inférieur à 7,78.10⁻⁴ ni supérieur à 12,22.10⁻⁴, le coefficient de torsion TN étant le produit Tx√D de la torsion T de câblé (tours par fraction de 10 cm) du câblé et de la racine carrée du denier total D (deniers) du câblé, caractérisé en ce que chaque nappe (10a) de bandage est formée d'au moins un câblé de ceinture de bandage enroulé en spirale de façon continue d'un bord à l'autre de la nappe de manière que l'angle de câblé soit compris entre 0 et 5° par rapport à l'équateur du pneumatique.

2. Pneumatique à carcasse radiale selon la revendication 1, caractérisé en ce que l'épaisseur du câblé de ceinture enroulé dans chaque nappe de ceinture de bandage est plus grande à l'équateur du pneumatique que dans les parties de bord de la nappe.

3. Pneumatique à carcasse radiale selon la revendication 1, caractérisé en ce que les câblés de ceinture sont caoutchoutés avec une composition de caoutchouc ayant un module à 100 % compris entre 30 et 70 bar (kgf/cm²) et un allongement à la rupture qui n'est ni inférieur à 200 % ni supérieur à 500 %.

4. Pneumatique à carcasse radiale selon la revendication 3, caractérisé en ce que l'adhérence du câblé de ceinture à son caoutchouc d'enrobage n'est pas inférieure à 206 N/cm (21,0 kgf/cm).

5. Pneumatique à carcasse radiale selon la revendication 1, caractérisé en ce que la carcasse (7) comporte une couche interne (7A) repliée autour des tringles de l'intérieur vers l'extérieur du pneumatique, et une couche externe (7b) repliée autour des tringles de l'extérieur vers l'intérieur du pneumatique afin qu'elle enveloppe les parties repliées de la couche interne (7a).

6. Pneumatique à carcasse radiale selon la revendication 5, caractérisé en ce que la couche interne (7A) est composée de plusieurs nappes (7a), et la couche externe (7B) est composée de plusieurs nappes (7b).
